# EUROPEAN PATENT APPLICATION

(11) **EP 4 746 557 A1**
(43) Date of publication of application: **20.05.2026**
(21) Application number: 24838790.4
(22) Date of filing: 09.07.2024
(51) Int. Cl.: H04W 72/12

(54) **TIME DETERMINATION METHOD AND APPARATUS, AND TERMINAL AND NETWORK-SIDE DEVICE**

(30) Priority: 10.07.2023 CN 202310840170
(71) Applicant: Vivo Mobile Communication Co., Ltd., Dongguan, Guangdong 523863 (CN)
(72) Inventor: LIN, Zhipeng, Dongguan, Guangdong 523863 (CN); WANG, Yong, Dongguan, Guangdong 523863 (CN); JIANG, Wei, Dongguan, Guangdong 523863 (CN)
(74) Representative: Shieldmark
(86) International application number: PCT/CN2024/104393
(87) International publication number: WO 2025/011538

(57) **Abstract**

This application discloses a time determination method, a time determination apparatus, a terminal, and a network-side device, and pertains to the field of communication technologies. The time determination method in this application includes: determining, by a terminal, a transmission time of an uplink channel or a reception time of a downlink channel under a target condition; where the target condition includes at least one of the following: the downlink channel is repeatedly transmitted, and the downlink channel supports repeated transmission; the downlink channel includes: a downlink channel that the terminal needs to receive before entering a connected state; the uplink channel is an uplink channel corresponding to the downlink channel.

## Description

### CROSS-REFERENCE TO RELATED APPLICATIONS

This application claims priority to Chinese Patent Application No. 202310840170.X filed with the China National Intellectual Property Administration on July 10, 2023, which is incorporated herein by reference in its entirety.

### TECHNICAL FIELD

This application pertains to the field of communication technologies, and specifically relates to a time determination method, a time determination apparatus, a terminal, and a network-side device.

### BACKGROUND

Before entering a connected state, a terminal often needs to receive some downlink channels, for example, messages in a random-access procedure or paging messages. In some related technologies, the downlink channels that the terminal needs to receive before entering the connected state often support only a single transmission, which results in a relatively low success rate for the terminal to receive the downlink channels, thereby leading to relatively poor service performance of the terminal.

### SUMMARY

Embodiments of this application provide a time determination method, a time determination apparatus, a terminal, and a network-side device, so as to address the issue of relatively poor service performance of a terminal.

In a first aspect, a time determination method is provided, including:
determining, by a terminal, a transmission time of an uplink channel or a reception time of a downlink channel under a target condition;
where the target condition includes at least one, one of the following:
   the downlink channel is repeatedly transmitted, and the downlink channel supports repeated transmission;
   the downlink channel includes: a downlink channel that the terminal needs to receive before entering a connected state; and
   the uplink channel is an uplink channel corresponding to the downlink channel.

In a second aspect, a time determination method is provided, including:
determining, by a network-side device, a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that needs to be transmitted to a terminal before the terminal enters the connected state; and
   the uplink channel is an uplink channel corresponding to the downlink channel.

In a third aspect, a time determination apparatus is provided, including:
a determination module, configured to determine a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that a terminal needs to receive before entering a connected state; and
   the uplink channel is an uplink channel corresponding to the downlink channel.

In a fourth aspect, a time determination apparatus is provided, including:
a determination module, configured to determine a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that needs to be transmitted to a terminal before the terminal enters the connected state; and
   the uplink channel is an uplink channel corresponding to the downlink channel.

In a fifth aspect, a terminal is provided, where the terminal includes a processor and a memory, the memory stores a program or an instruction capable of running on the processor, and when the program or the instruction is executed by the processor, the steps of the time determination method on the terminal side provided in embodiments of this application are implemented.

In a sixth aspect, a terminal is provided, including a processor and a communication interface, where the processor is configured to determine a transmission time of an uplink channel or a reception time of a downlink channel under a target condition; where the target condition includes at least one of the following: the downlink channel is repeatedly transmitted, and the downlink channel supports repeated transmission; the downlink channel includes: a downlink channel that the terminal needs to receive before entering a connected state; and the uplink channel is an uplink channel corresponding to the downlink channel.

In a seventh aspect, a network-side device is provided, where the network-side device includes a processor and a memory, the memory stores a program or an instruction capable of running on the processor, and when the program or the instruction is executed by the processor, the steps of the time determination method on the network-side device side provided in embodiments of this application are implemented.

In an eighth aspect, a network-side device is provided, including a processor and a communication interface, where the processor is configured to determine a transmission time of an uplink channel or a reception time of a downlink channel under a target condition; where the target condition includes at least one of the following: the downlink channel is repeatedly transmitted, and the downlink channel supports repeated transmission; the downlink channel includes: a downlink channel that needs to be transmitted to a terminal before the terminal enters the connected state; and the uplink channel is an uplink channel corresponding to the downlink channel.

In a ninth aspect, a readable storage medium is provided, where the readable storage medium stores a program or an instruction, and when the program or the instruction is executed by a processor, the steps of the time determination method on the terminal side provided in embodiments of this application are implemented, or the steps of the time determination method on the network-side device side provided in embodiments of this application are implemented.

In a tenth aspect, a wireless communication system is provided, including: a terminal and a network-side device, where the terminal can be configured to perform the steps of the time determination method on the terminal side provided in embodiments of this application, and the network-side device can be configured to perform the steps of the time determination method on the network-side device side provided in embodiments of this application.

In an eleventh aspect, a chip is provided, where the chip includes a processor and a communication interface, the communication interface is coupled to the processor, and the processor is configured to run a program or an instruction to implement the time determination method on the terminal side provided in embodiments of this application, or implement the time determination method on the network-side device side provided in embodiments of this application.

In a twelfth aspect, a computer program/program product is provided, where the computer program/program product is stored in a storage medium, and the computer program/program product is executed by at least one processor to implement the steps of the time determination method on the terminal side provided in embodiments of this application, or the computer program/program product is executed by at least one processor to implement the steps of the time determination method on the network-side device side provided in embodiments of this application.

In the embodiments of this application, a transmission time of an uplink channel or a reception time of a downlink channel is determined under a target condition; where the target condition includes at least one of the following: the downlink channel is repeatedly transmitted, and the downlink channel supports repeated transmission; the downlink channel includes: a downlink channel that the terminal needs to receive before entering a connected state; and the uplink channel is an uplink channel corresponding to the downlink channel. In this way, when the downlink channel is repeatedly transmitted or the downlink channel supports repeated transmission, the transmission time of the uplink channel or the reception time of the downlink channel can be determined, thereby enabling the terminal to support repeated transmission of the downlink channel, which thereby improves the success rate of the terminal in receiving the downlink channel, improving the service performance of the terminal.

### BRIEF DESCRIPTION OF DRAWINGS

FIG. 1 is a block diagram of a wireless communication system to which embodiments of this application are applicable;
FIG. 2 is a flowchart of a time determination method according to an embodiment of this application;
FIG. 3 is a flowchart of another time determination method according to an embodiment of this application;
FIG. 4 is a structural diagram of a time determination apparatus according to an embodiment of this application;
FIG. 5 is a structural diagram of another time determination apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DESCRIPTION OF EMBODIMENTS

The technical solutions in the embodiments of this application are clearly described below with reference to the accompanying drawings in the embodiments of this application. Apparently, the described embodiments are some rather than all of the embodiments of this application. All other embodiments obtained by persons of ordinary skill in the art based on the embodiments of this application shall fall within the protection scope of this application.

The terms "first", "second", and the like in this application are used to distinguish similar objects, but are not used to describe a specific order or sequence. It should be understood that the terms used in this way are interchangeable in appropriate circumstances, so that the embodiments of this application can be implemented in an order other than those illustrated or described herein, and the objects distinguished by "first" and "second" are generally of the same type and the number of objects is not limited. For example, there may be one or more first objects. In addition, "or" in this application means at least one of the connected objects. For example, "A or B" covers three cases: case 1: including A but not including B; case 2: including B but not including A; case 3: including both A and B. The character "/" generally indicates an "or" relationship between the associated objects.

The term "indication" in this application may be a direct indication (or explicit indication) or an indirect indication (or implicit indication). The direct indication may be understood as the transmitter explicitly informing the receiver of specific information, an operation to be performed, or a request result in the transmitted indication. The indirect indication may be understood as the receiver determining corresponding information according to the indication transmitted by the transmitter, or performing judgment and determining an operation to be performed or a request result according to a judgment result.

It should be noted that the technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency-division multiple access (Single-carrier Frequency-Division Multiple Access, SC-FDMA), and other systems. The terms "system" and "network" in the embodiments of this application are often used interchangeably, and the described technologies can be used for the foregoing systems and radio technologies, and can also be used for other systems and radio technologies. A new radio (New Radio, NR) system is described below for illustration purposes, and NR terms are used in most of the following descriptions, but these technologies can also be applied to applications other than NR system applications, for example, a 6th Generation (6^{th} Generation, 6G) communication system.

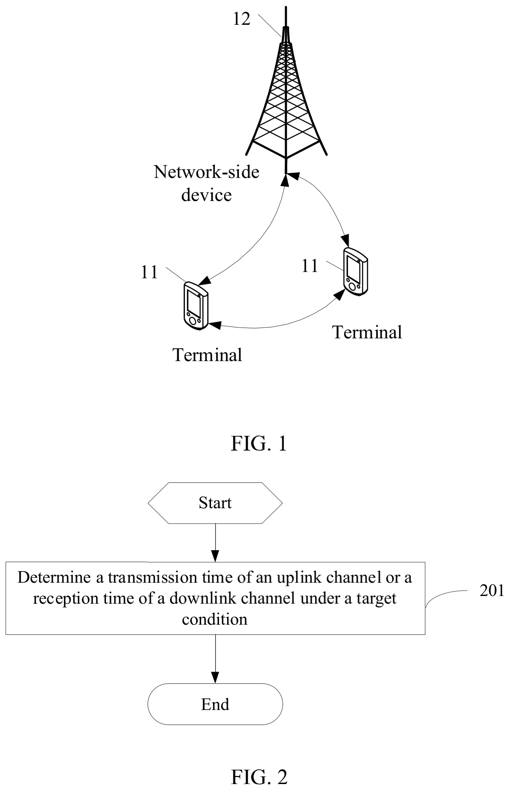

FIG. 1 is a block diagram of a wireless communication system to which embodiments of this application are applicable. The wireless communication system includes a terminal 11 and a network-side device 12. The terminal 11 may be a terminal-side device, such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR), virtual reality (Virtual Reality, VR) device, a robot, a wearable device (Wearable Device), a flight vehicle (flight vehicle), a vehicle user equipment (Vehicle User Equipment, VUE), shipborne equipment, pedestrian user equipment (Pedestrian User Equipment, PUE), a smart appliance (a household device with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart ankle bangle, a smart anklet, or the like), a smart wristband, smart clothing, or the like. The vehicle user equipment may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiments of this application. The network-side device 12 may include an access network device or a core network device. The access network device may also be referred to as a radio access network (Radio Access Network, RAN) device, radio access network function, or radio access network unit. The access network device may include base stations, wireless local area network (Wireless Local Area Network, WLAN) access points (Access Point, AP), wireless fidelity (Wireless Fidelity, WiFi) nodes, or the like. The base station may be referred to as a Node B (Node B, NB), an evolved Node B (Evolved Node B, eNB), a next generation Node B (the next generation Node B, gNB), a New Radio Node B (New Radio Node B, NR Node B), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home Node B (home Node B, HNB), a home evolved Node B (home evolved Node B), a transmission reception point (Transmission Reception Point, TRP), or another appropriate term in the art. As long as the same technical effects are achieved, the base station is not limited to any specific technical terminology. It should be noted that in the embodiments of this application, only the base station in the NR system is introduced as an example, and the specific type of the base station is not limited.

The core network device may include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function (Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF or L-NEF), binding support function (Binding Support Function, BSF), application function (Application Function, AF), and the like. It should be noted that in the embodiments of this application, only a core network device in an NR system is used as an example for description, and a specific type of the core network device is not limited.

In some embodiments, a random-access procedure may be a contention-based random-access procedure or a contention-free random-access procedure. The random-access procedure may be a four-step random-access procedure (also referred to as a Type-1 random-access procedure) or a two-step random-access procedure (also referred to as a Type-2 random-access procedure).

In a contention-based 4-step random-access channel procedure, a terminal first transmits Message 1 (Msg1) to a network, where Msg1 includes a preamble (preamble); after detecting the preamble, the network transmits a Message 2 (Msg2)/random-access response (Random Access Response, RAR) message, where the RAR message includes a number of the preamble detected by the network and uplink radio resources allocated to the terminal for transmitting Message 3 (Msg3); after receiving Msg2, the terminal confirms that at least one of the preamble numbers carried in Msg2 is consistent with the preamble number transmitted by the terminal, and then transmits Msg3 including contention resolution information based on resources indicated by the RAR; after receiving Msg3, the network transmits Message 4 (Msg4) including the contention resolution information; and after receiving Msg4, the terminal confirms that the contention resolution information is consistent with the contention resolution information transmitted by the terminal in Msg3, that is, the 4-step random-access is completed.

The network includes uplink grant (UL grant) information in the RAR for indicating an Msg3 physical uplink shared channel (Physical Uplink Shared Channel, PUSCH) scheduling information, and includes information such as a random-access preamble identifier (RACH preamble ID, RAPID), a temporary cell-radio network temporary identifier (temporary cell-radio network temporary identifier, TC-RNTI), and a timing advance (Timing Advance, TA). If the network fails to receive the Msg3 PUSCH, the network may schedule retransmission of the Msg3 PUSCH in a physical downlink control channel (Physical downlink control channel, PDCCH) scrambled by the TC-RNTI.

For a contention-based random-access procedure, different terminals randomly select a preamble for transmission. As a result, different terminals may select the same preamble for transmission on the same time-frequency radio resource (for example, a random-access occasion (RACH Occasion, RO) resource). This case may be understood as a preamble collision among terminals. In this case, the different terminals receive the same RAR, and then the different terminals perform transmission of the Msg3 PUSCH based on scheduling information in the UL grant of the RAR. In some related technologies, because repeated transmission of the Msg3 PUSCH is not supported, the network can decode only a PUSCH (including contention resolution information) transmitted by one terminal on one Msg3 PUSCH scheduling resource. Therefore, the network includes, in Msg4, the contention resolution information received in Msg3. If the contention resolution information in the Msg4 received by the terminal matches the contention resolution information transmitted by the terminal in the Msg3 PUSCH, the terminal determines that contention resolution is successful; otherwise, contention resolution is determined to be unsuccessful.

If contention resolution is unsuccessful, the terminal reselects a RACH transmission resource, transmits a physical random-access channel (Physical Random Access Channel, PRACH), and initiates a next random-access attempt.

In some embodiments, a first step in a two-step random-access procedure (2-step RACH) is that a terminal transmits Message A (MsgA) to a network side. After receiving MsgA, the network side transmits Message B (MsgB) to the terminal. If the terminal does not receive MsgB within a specific time, the terminal increments a counter for counting the number of MsgA transmissions by one and retransmits MsgA. If the counter for counting the number of MsgA transmissions reaches a specific threshold, the terminal switches from the two-step random-access procedure to the four-step random-access procedure. MsgA includes a MsgA preamble part and a MsgA PUSCH part. The preamble part is transmitted on an RO used for the two-step random-access procedure, and the PUSCH part is transmitted on a MsgA PUSCH resource associated with the transmitted MsgA preamble and RO. The MsgA PUSCH resource is a group of PUSCH resources configured relative to each PRACH slot (slot), including time-frequency resources and demodulation reference signal (Demodulation Reference Signal, DMRS) resources.

In some embodiments, in the random-access procedure, the reception of the physical downlink shared channel (Physical downlink shared channel, PDSCH) scheduling information for scheduling Msg2/MsgB/Msg4 needs to be performed within a specific window, and a size of the window is configured by the network.

For Msg2, the foregoing window starts from a first symbol of a first control resource set (Control resource set, CORESET) in a typel-PDCCH common search space set (Type1-PDCCH CSS set) after PRACH transmission. For MsgB, the foregoing window starts from a first symbol of a first CORESET in the Type1-PDCCH CSS set after a PUSCH (MsgA PUSCH part) resource corresponding to PRACH (MsgA PRACH part) transmission. For Msg3, the foregoing window actually is controlled by a random-access contention resolution timer (ra-ContentionResolutionTimer), and the timer is started or restarted when Msg3 transmission is completed (or when the last repetition of Msg3 is transmitted if Msg3 repetition (repetition) is supported).

The time determination method, time determination apparatus, terminal, and network-side device provided in the embodiments of this application are described in detail below with reference to the accompanying drawings through some embodiments and application scenarios thereof.

Referring to FIG. 2, FIG. 2 is a flowchart of a time determination method according to an embodiment of this application. As shown in FIG. 2, the method includes the following step:
step 201: A terminal determines a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that the terminal needs to receive before entering a connected state; and
   the uplink channel is an uplink channel corresponding to the downlink channel.

That the downlink channel supports repeated transmission may mean that the network side configures repeated transmission for the downlink channel, or a protocol stipulates repeated transmission for the downlink channel, or the terminal requests repeated transmission for the uplink channel, or the like. In addition, in the embodiments of this application, that the downlink channel supports repeated transmission may also be referred to as downlink channel repeated transmission or downlink channel repetition.

That the downlink channel is repeatedly transmitted may mean that the downlink channel has been repeatedly transmitted, or the downlink channel is to be repeatedly transmitted, or the downlink channel needs to be repeatedly transmitted, or the like.

The determining of a transmission time of an uplink channel may mean directly determining the transmission time of the uplink channel, or indirectly determining the transmission time of the uplink channel, for example, determining a reference time of the transmission time of the uplink channel, or determining a time interval between a reception time of a downlink channel and the transmission time of the uplink channel.

The determining of a reception time of a downlink channel may mean determining a time domain resource for receiving the downlink channel, or determining an absolute time of receiving the downlink channel, or determining a reception duration of the downlink channel, or the like
In the embodiments of this application, through the foregoing steps, the transmission time of the uplink channel or the reception time of the downlink channel can be determined under the condition that the downlink channel is repeatedly transmitted or the downlink channel supports repeated transmission, thereby enabling the terminal to support repeated transmission of the downlink channel, improving the success rate of the terminal in receiving the downlink channel, improving the service performance of the terminal. For example, when the downlink channel is a downlink channel in a random-access procedure, the random-access latency can be reduced and terminal reception complexity can be decreased.

In some implementations, the method further includes at least one of the following:
transmitting, by the terminal, an uplink channel based on the transmission time of the uplink channel;
receiving, by the terminal, a downlink channel based on the reception time of the downlink channel.

In addition, for a network-side device, the method includes at least one of the following:
receiving, by the network-side device, an uplink channel based on the transmission time of the uplink channel;
transmitting, by the network-side device, a downlink channel based on the reception time of the downlink channel.

In an optional implementation, the downlink channel that the terminal needs to receive before entering the connected state includes at least one of the following:
an Msg2 PDSCH, an MsgB PDSCH, an Msg4 PDSCH, and a paging PDSCH.

In this implementation, repeated transmission of at least one of Msg2 PDSCH, MsgB PDSCH, Msg4 PDSCH, and paging PDSCH can be implemented, that is, enhancement of Msg2 PDSCH, MsgB PDSCH, Msg4 PDSCH, and paging PDSCH can be achieved, thereby improving the random-access performance of the terminal and improving the paging performance of the terminal.

It should be noted that in the embodiments of this application, repeated transmission of Msg2 PDSCH may also be referred to as Msg2 PDSCH repetition (Msg2 PDSCH repetition) or Msg2 repetition; repeated transmission of MsgB PDSCH may also be referred to as MsgB PDSCH repetition (MsgB PDSCH repetition) or MsgB repetition; repeated transmission of Msg4 PDSCH may also be referred to as Msg4 PDSCH repetition (Msg4 PDSCH repetition) or Msg4 repetition; and repeated transmission of paging PDSCH may also be referred to as paging PDSCH repetition (paging PDSCH repetition).

It should be noted that in the embodiments of this application, the downlink channel is not limited. For example, in some implementations, the downlink channel may include all or part of downlink channels before the terminal enters a radio resource control (Radio Resource Control, RRC) connected state.

In an optional implementation, the uplink channel corresponding to the downlink channel includes at least one of the following:
a PUSCH scheduled by a RAR, a physical uplink control channel (Physical Uplink Control Channel, PUCCH) for feeding back a hybrid automatic repeat request acknowledgement (Hybrid automatic repeat request acknowledgement, HARQ-ACK) of Msg4, and a PUCCH for feeding back a HARQ-ACK of MsgB;
where the RAR includes at least one of the following: a RAR carried by Msg2 PDSCH and a RAR carried by MsgB PDSCH.

The RAR carried by Msg2 PDSCH may also be referred to as a RAR carried by Msg2, and the RAR carried by MsgB PDSCH may also be referred to as a RAR carried by MsgB. The PDSCH carrying a RAR may also be referred to as RAR PDSCH.

In this implementation, the RAR may be a RAR message in Msg2 in a 4-step RACH (4-step RACH), or a success RAR (success RAR) or a fallback RAR (fallback RAR) in a 2-step RACH (2-step RACH).

In this implementation, the transmission time of the PUSCH scheduled by the RAR can be determined, the transmission time of the PUCCH for Msg4 HARQ-ACK feedback can be determined, and the transmission time of the PUCCH for MsgB HARQ-ACK feedback can be determined, so as to improve transmission performance of the terminal for these uplink channels, for example, enabling the terminal and the network-side device to have consistent understanding of transmission times of these uplink channels, thereby improving reliability of transmission of these uplink channels.

In an optional implementation, in a case that the uplink channel includes a PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in repeated transmissions of the downlink channel; or
a transmission time determined based on a second reference time domain resource, where the second reference time domain resource corresponds to one time point of a RAR window (RAR window), or the second reference time domain resource corresponds to one time point of an MsgB response window (MsgB response window).

In some implementations, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

For example, the first reference time domain resource includes at least one of the following:
a slot in which a first PDSCH repetition is actually transmitted;
a valid slot capable of transmitting a first PDSCH repetition;
an available slot (available slot) capable of transmitting a first PDSCH repetition; and
a slot in which a first PDSCH repetition is located.

In some implementations, the first PDSCH may be an Msg2 PDSCH or MsgB PDSCH. In addition, the first PDSCH is a specific transmission or a predefined transmission in the repeated transmissions of the downlink channel. Herein, one transmission may also be referred to as one repetition.

In some implementations, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

The nth transmission may be understood as an nth repetition, for example, a first transmission, a second transmission, or a last transmission.

The last transmission may also be referred to as a last downlink channel repetition transmission or a last downlink channel repetition.

For example, a reference slot for the transmission time of the PUSCH scheduled by the foregoing RAR is a slot in which a predefined PDSCH repetition transmission carrying a RAR is located. For example, when the RAR PDSCH supports repeated transmission, a reference slot for determining the transmission time of the PUSCH scheduled by the RAR is a slot in which the last PDSCH repetition transmission is located.

The reference time domain resource for the transmission time of the PUSCH scheduled by the RAR can be accurately determined in the foregoing manner, thereby accurately determining the transmission time of the PUSCH scheduled by the RAR, enabling the network and the terminal to have consistent understanding of a scheduling time of the PUSCH of the RAR, and further improving the transmission performance of the PUSCH. In addition, because the first PDSCH is the last transmission in the repeated transmissions of the downlink channel, a sufficient time interval may be provided between the first PDSCH and the transmission time of the PUSCH scheduled by the RAR, enabling the terminal to better process the first PDSCH and prepare for the transmission of the PUSCH, so as to improve the transmission reliability of the PUSCH.

That the second reference time domain resource corresponds to one time point of a RAR window may mean that the second reference time domain resource is a time domain resource corresponding to a predefined time point of the RAR window, for example, a start slot of the RAR window. That the second reference time domain resource corresponds to one time point of an MsgB response window may mean that the second reference time domain resource is a time domain resource corresponding to a predefined time point of the MsgB response window, for example, a start slot of the MsgB response window.

The foregoing first reference time domain resource and second reference time domain resource may be a first reference slot and a second reference slot, that is, reference slots for determining the transmission time of the PUSCH.

The transmission time determined based on a first reference time domain resource may be the transmission time determined in a manner of determining a transmission time of a PUSCH based on a reference time domain resource as stipulated in the protocol. For example, the transmission time of the PUSCH scheduled by the RAR is determined based on a first reference slot in a manner of determining a transmission slot of a PUSCH based on a reference slot as stipulated in the protocol. Similarly, the transmission time determined based on a second reference time domain resource may be the transmission time determined in a manner of determining a transmission time of a PUSCH based on a reference time domain resource as stipulated in the protocol.

In the foregoing implementation, the transmission time of the PUSCH scheduled by the RAR can be accurately determined based on the first reference time domain resource or the second reference time domain resource, enabling the network and the terminal to have consistent understanding of a scheduling time of the PUSCH of the RAR, and further improving the transmission performance of the PUSCH.

In an optional implementation, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

In this implementation, the determining a transmission time of an uplink channel includes: determining a time interval from a reception time of the RAR to the transmission time of the PUSCH scheduled by the RAR, so that the transmission time of the PUSCH scheduled by the RAR can be determined based on the time interval.

The first time interval may be a time interval defined in the protocol from a reception time of a RAR to the transmission time of the PUSCH scheduled by the RAR, and the target time may be a target time determined through protocol stipulation or network-side configuration, and the target time may be understood as a time offset.

The first minimum time interval may be a minimum time interval defined in the protocol from a reception time of a RAR to the transmission time of the PUSCH scheduled by the RAR.

In the foregoing implementation, it is possible to enhance the time interval or the minimum time interval from a reception time of a RAR to a transmission time of a PUSCH scheduled by the RAR by introducing a target time, thereby improving the transmission performance of the PUSCH.

The first processing time being a processing time for repeated transmission of the downlink channel may be a processing time newly defined or additionally defined for repeated transmission of the downlink channel. For example, a processing time for RAR PDSCH repetition (RAR PDSCH repetition) is additionally defined to replace *N*_{*T,*1}*,* where *N*_{*T,*1} is a parameter in a formula defined in the protocol for determining a time interval from a reception time of a RAR to the transmission time of the PUSCH scheduled by the RAR.

The second processing time being a PUSCH processing time in a case that the downlink channel is repeatedly transmitted may be a PUSCH processing time newly defined or additionally defined for a case of repeated transmission of the downlink channel. For example, a PUSCH processing time is additionally defined for a case of RAR PDSCH repetition to replace *N*_{*T,*2}*,* where *N*_{*T,*2} is a parameter in a formula defined in the protocol for determining a time interval from a reception time of a RAR to the transmission time of the PUSCH scheduled by the RAR.

The second time interval determined based on a first processing time may be a second time interval determined based on a first processing time in a manner defined in the protocol for determining a time interval from a reception time of a RAR to the transmission time of the PUSCH scheduled by the RAR. The second minimum time interval determined based on a first processing time may be a second minimum time interval determined based on a first processing time in a manner defined in the protocol for determining a minimum time interval from a reception time of a RAR to the transmission time of the PUSCH scheduled by the RAR.

The third time interval determined based on a second processing time may be a third time interval determined based on a second processing time in a manner defined in the protocol for determining a time interval from a reception time of a RAR to the transmission time of the PUSCH scheduled by the RAR. The third minimum time interval determined based on a second processing time may be a third minimum time interval determined based on a second processing time in a manner defined in the protocol for determining a time interval from a reception time of a RAR to the transmission time of the PUSCH scheduled by the RAR.

In the foregoing implementation, a time interval or a minimum time interval from a reception time of a RAR to the transmission time of the PUSCH scheduled by the RAR can be determined based on the first processing time or second processing time, so that it is possible to enhance the time interval or the minimum time interval from a reception time of a RAR to a transmission time of a PUSCH scheduled by the RAR, thereby improving the transmission performance of the PUSCH.

In an optional implementation, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer (contention resolution timer) is started or restarted.

In some implementations, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

In some implementations, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

In some implementations, the second PDSCH may be Msg4 PDSCH. In addition, the second PDSCH is a specific transmission or a predefined transmission in the repeated transmissions of the foregoing Msg4 PDSCH, and specifically is one transmission carrying a contention resolution identifier (contention resolution ID). Herein, one transmission may also be referred to as one repetition.

For example, for transmission of HARQ feedback of Msg4 PDSCH, a reference time for a time interval between a reception time of Msg4 PDSCH and a transmission time of a corresponding PUCCH is a slot in which a predefined PDSCH repetition transmission carrying a contention resolution ID is located.

The time interval determined based on a third reference time domain resource may be the time interval determined in a manner stipulated in the protocol for determining a time interval from a reception time of Msg4 to a transmission time of a PUCCH for feeding back a HARQ-ACK of the Msg4, for example, a time interval from a reception time of Msg4 to a transmission time of a PUCCH for feeding back a HARQ-ACK of the Msg4, determined based on a third reference slot in a manner stipulated in the protocol for determining a time interval from a reception time of Msg4 to a transmission time of a PUCCH for feeding back a HARQ-ACK of the Msg4 based on a reference slot. Similarly, the time interval determined based on a fourth reference time domain resource may be the time interval determined in a manner stipulated in the protocol for determining a time interval from a reception time of Msg4 to a transmission time of a PUCCH for feeding back a HARQ-ACK of the Msg4.

The minimum time interval determined based on a third reference time domain resource may be the minimum time interval determined in a manner stipulated in the protocol for determining a minimum time interval from a reception time of Msg4 to a transmission time of a PUCCH for feeding back a HARQ-ACK of the Msg4, for example, a minimum time interval from a reception time of Msg4 to a transmission time of a PUCCH for feeding back a HARQ-ACK of the Msg4, determined based on a third reference slot in a manner stipulated in the protocol for determining a minimum time interval from a reception time of Msg4 to a transmission time of a PUCCH for feeding back a HARQ-ACK of the Msg4 based on a reference slot. Similarly, the minimum time interval determined based on a fourth reference time domain resource may be the minimum time interval determined in a manner stipulated in the protocol for determining a minimum time interval from a reception time of Msg4 to a transmission time of a PUCCH for feeding back a HARQ-ACK of the Msg4.

In the foregoing implementation, a time interval or a minimum time interval from a reception time of Msg4 to the transmission time of the PUCCH for feeding back a HARQ-ACK of the Msg4 can be determined based on the third reference time domain resource or fourth reference time domain resource, so that it is possible to enhance the time interval or a minimum time interval from a reception time of Msg4 to a transmission time of a PUCCH for feeding back a HARQ-ACK of the Msg4, thereby improving the transmission performance of the PUCCH.

In an optional implementation, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel; and
   the sixth reference time domain resource corresponds to one time point of a RAR window, or the sixth reference time domain resource corresponds to one time point of an MsgB response window.

That the sixth reference time domain resource corresponds to one time point of a RAR window may mean that the sixth reference time domain resource is a time domain resource corresponding to a predefined time point of the RAR window, for example, a start slot of the RAR window. That the sixth reference time domain resource corresponds to one time point of an MsgB response window may mean that the sixth reference time domain resource is a time domain resource corresponding to a predefined time point of the MsgB response window, for example, a start slot of the MsgB response window.

In some implementations, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

In some implementations, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

In some implementations, the third PDSCH may be MsgB PDSCH. In addition, the third PDSCH is a specific transmission or a predefined transmission in the repeated transmissions of the MsgB PDSCH, and specifically is one transmission carrying a contention resolution identifier (contention resolution ID). Herein, one transmission may also be referred to as one repetition.

For example, for transmission of HARQ feedback of MsgB PDSCH, a reference time for a time interval between a reception time of MsgB PDSCH and a transmission time of a corresponding PUCCH is a slot in which a predefined PDSCH repetition transmission carrying a contention resolution ID is located.

The time interval determined based on a fifth reference time domain resource may be the time interval determined in a manner stipulated in the protocol for determining a time interval from a reception time of MsgB to a transmission time of a PUCCH for feeding back a HARQ-ACK of the MsgB, for example, a time interval from a reception time of MsgB to a transmission time of a PUCCH for feeding back a HARQ-ACK of the MsgB, determined based on a third reference slot in a manner stipulated in the protocol for determining a time interval from a reception time of MsgB to a transmission time of a PUCCH for feeding back a HARQ-ACK of the MsgB based on a reference slot. Similarly, the time interval determined based on a sixth reference time domain resource may be the time interval determined in a manner stipulated in the protocol for determining a time interval from a reception time of MsgB to a transmission time of a PUCCH for feeding back a HARQ-ACK of the MsgB.

The minimum time interval determined based on a fifth reference time domain resource may be the foregoing minimum time interval determined in a manner stipulated in the protocol for determining a minimum time interval from a reception time of MsgB to a transmission time of a PUCCH for feeding back a HARQ-ACK of the MsgB, for example, a minimum time interval from a reception time of MsgB to a transmission time of a PUCCH for feeding back a HARQ-ACK of the MsgB, determined based on a fifth reference slot in a manner stipulated in the protocol for determining a minimum time interval from a reception time of MsgB to a transmission time of a PUCCH for feeding back a HARQ-ACK of the MsgB based on a reference slot. Similarly, the minimum time interval determined based on a sixth reference time domain resource may be the minimum time interval determined in a manner stipulated in the protocol for determining a minimum time interval from a reception time of MsgB to a transmission time of a PUCCH for feeding back a HARQ-ACK of the MsgB.

In the foregoing implementation, a time interval or a minimum time interval from a reception time of MsgB to a transmission time of a PUCCH for feeding back a HARQ-ACK of the MsgB can be determined based on the fifth reference time domain resource or sixth reference time domain resource, so that it is possible to enhance the time interval or a minimum time interval from a reception time of MsgB to a transmission time of a PUCCH for feeding back a HARQ-ACK of the MsgB, thereby improving the transmission performance of the PUCCH.

In an optional implementation, the reception time of the downlink channel includes at least one of the following:
a RAR window, an MsgB response window, and a contention resolution timer duration.

The RAR window may be a RAR window in a 4-step RACH, and the foregoing MsgB response window may be an MsgB response window in a 2-step RACH.

In this implementation, specifically, the RAR window size is determined, the MsgB response window size is determined, and the contention resolution timer duration is determined.

In this implementation, when the downlink channel is repeatedly transmitted or the downlink channel supports repeated transmission, at least one of the RAR window, the MsgB response window, and the contention resolution timer duration can be determined, so that the terminal can better receive the downlink channel within a reception time of the downlink channel, improving the reception performance of the downlink channel, for example, reducing the complexity of receiving the downlink channel.

In some implementations, it is possible to enhance at least one of the foregoing RAR window, MsgB response window, and contention resolution timer duration.

Optionally, the RAR window includes:
a RAR window defined for repeated transmission of the downlink channel; or a RAR window obtained by adding an offset to a RAR window not supporting repeated transmission of the downlink channel.

The RAR window defined for repeated transmission of the downlink channel may be a RAR window additionally defined for repeated transmission of the downlink channel. For example, a size of a RAR window dedicated to supporting Msg2/MsgB repetition is additionally defined.

The RAR window not supporting repeated transmission of the downlink channel may be a RAR window already defined or newly defined in the protocol to not support repeated transmission of the downlink channel.

The added offset may be stipulated in the protocol or configured by the network side.

In this implementation, it is possible to enhance the RAR window in the foregoing two manners, so as to improve the reception performance of the downlink channel of the terminal.

Optionally, the MsgB response window includes:
an MsgB response window defined for repeated transmission of the downlink channel; or an MsgB response window obtained by adding an offset to an MsgB response window not supporting repeated transmission of the downlink channel.

The MsgB response window defined for repeated transmission of the downlink channel may be an MsgB response window additionally defined for repeated transmission of the downlink channel. For example, a size of an MsgB response window dedicated to supporting MsgB repetition is additionally defined.

The MsgB response window not supporting repeated transmission of the downlink channel may be an MsgB response window already defined or newly defined in the protocol to not support repeated transmission of the downlink channel.

The added offset may be stipulated in the protocol or configured by the network side.

In this implementation, it is possible to enhance the MsgB response window in the foregoing two manners, so as to improve the reception performance of the downlink channel of the terminal.

Optionally, the contention resolution timer duration includes:
a contention resolution timer duration defined for repeated transmission of the downlink channel; or a contention resolution timer duration obtained by adding an offset to a contention resolution timer not supporting repeated transmission of the downlink channel.

The contention resolution timer duration defined for repeated transmission of the downlink channel may be a contention resolution timer duration additionally defined for repeated transmission of the downlink channel. For example, a size of a contention resolution timer duration (contention resolution timer duration) dedicated to supporting Msg4 repetition is additionally defined.

The contention resolution timer not supporting repeated transmission of the downlink channel may be a contention resolution timer already defined or newly defined in the protocol to not support repeated transmission of the downlink channel.

The added offset may be stipulated in the protocol or configured by the network side.

In this implementation, it is possible to enhance the contention resolution timer duration in the foregoing two manners, so as to improve the reception performance of the downlink channel of the terminal.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel.

That reception of repeated transmission of the downlink channel is not allowed to span the RAR window may be that it is preconfigured or pre-stipulated that reception of repeated transmission of the downlink channel is not allowed to span the RAR window, so as to ensure consistent understanding between the terminal and the network regarding the reception of the repeated transmission of the downlink channel, thereby improving the transmission reliability of the downlink channel.

The network-side configuration may be a network-side configuration received by the terminal that indicates whether spanning the RAR window is allowed, so as to ensure consistent understanding between the terminal and the network regarding reception of repeated transmission of the downlink channel, thereby improving the transmission reliability of the downlink channel.

The determination based on the number of repetitions of the downlink channel may be that a relationship between the number of repetitions and whether spanning the RAR window is allowed is stipulated by the protocol or configured by the network side, so that whether spanning the RAR window is allowed is determined based on the number of repetitions. This also enables consistent understanding between the terminal and the network regarding reception of repeated transmission of the downlink channel, thereby improving the transmission reliability of the downlink channel.

Optionally, reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel.

That reception of repeated transmission of the downlink channel is not allowed to span the MsgB response window may be that it is preconfigured or pre-stipulated that reception of repeated transmission of the downlink channel is not allowed to span the MsgB response window, so as to ensure consistent understanding between the terminal and the network regarding the reception of repeated transmission of the downlink channel, thereby improving the transmission reliability of the downlink channel.

The network-side configuration may be a network-side configuration received by the terminal that indicates whether spanning the MsgB response window is allowed, so as to ensure consistent understanding between the terminal and the network regarding reception of repeated transmission of the downlink channel, thereby improving the transmission reliability of the downlink channel.

The determination based on the number of repetitions of the downlink channel may be that a relationship between the number of repetitions and whether spanning the MsgB response window is allowed is stipulated in a protocol or configured by the network side, so that whether spanning the MsgB response window is allowed is determined based on the number of repetitions. This also enables consistent understanding between the terminal and the network regarding reception of repeated transmission of the downlink channel, thereby improving the transmission reliability of the downlink channel.

Optionally, reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

That reception of repeated transmission of the downlink channel is not allowed to span the contention resolution timer duration may be that it is preconfigured or pre-stipulated that reception of repeated transmission of the downlink channel is not allowed to span the contention resolution timer duration, so as to ensure consistent understanding between the terminal and the network regarding the reception of repeated transmission of the downlink channel, thereby improving the transmission reliability of the downlink channel.

The network-side configuration may be a network-side configuration received by the terminal that indicates whether spanning the contention resolution timer duration is allowed, so as to implement consistent understanding between the terminal and the network regarding reception of repeated transmission of the downlink channel, thereby improving the transmission reliability of the downlink channel.

The determination based on the number of repetitions of the downlink channel may be that a relationship between the number of repetitions and whether spanning the contention resolution timer duration is allowed is stipulated by the protocol or configured by the network side, so that whether spanning the contention resolution timer duration is allowed is determined based on the number of repetitions. This also enables consistent understanding between the terminal and the network regarding reception of repeated transmission of the downlink channel, thereby improving the transmission reliability of the downlink channel.

In the embodiments of this application, a transmission time of an uplink channel or a reception time of a downlink channel is determined under a target condition; where the target condition includes at least one of the following: the downlink channel is repeatedly transmitted, and the downlink channel supports repeated transmission; the downlink channel includes: a downlink channel that the terminal needs to receive before entering a connected state; and the uplink channel is an uplink channel corresponding to the downlink channel. In this way, when the downlink channel is repeatedly transmitted or the downlink channel supports repeated transmission, the transmission time of the uplink channel or the reception time of the downlink channel can be determined, thereby enabling the terminal to support repeated transmission of the downlink channel, which thereby improves the success rate of the terminal in receiving the downlink channel, improving the service performance of the terminal.

For example, in some scenarios, such as a non-terrestrial network (non-terrestrial network, NTN) scenario, when a satellite needs to support multiple beams (beam), the downlink transmit power of each beam decreases. In this case, the reception performance of Msg2 or MsgB or Msg4 PDSCH cannot meet requirements due to the lack of support for repeated transmission, resulting in the inability to complete random-access, and consequently preventing all service (for example, voice over new radio (Voice over New Radio, VoNR) and low-speed data transmission) channels from proceeding further. Therefore, in the embodiments of this application, supporting the function of reporting a repeated transmission of Msg2/MsgB/Msg4 PDSCH or a request of the terminal for Msg2/MsgB/Msg4 PDSCH repetition can improve the service performance of the terminal.

It should be noted that the NTN scenario is only an applicable scenario provided in the embodiments of this application. For example, the method provided in the embodiments of this application may also be applicable to a terrestrial network (terrestrial network, TN) scenario.

For another example, when repeated transmission of RAR is supported, the reference slot for the transmission time of a scheduled PUSCH may be a slot in which one of multiple RAR repetitions is located. When repeated transmission of Msg4 is supported, the reference slot for the transmission time of a corresponding PUCCH for HARQ feedback may be a slot in which one of multiple Msg4 repetitions is located. When repeated transmission of MsgB is supported, the reference slot for the transmission time of a corresponding PUCCH for HARQ feedback may be a slot in which one of multiple MsgB repetitions is located. In these cases, the reference slot determined in the embodiments of this application may ensure consistent understanding between the network and the terminal regarding the scheduling time.

For another example, in some embodiments, to allow the network to perform multiple transmissions of the PDCCH scheduling RAR and multiple transmissions of the RAR within a RAR window (similar to multiple RAR transmissions within the RAR window), the RAR transmission may also need to be completed as much as possible within the RAR window. In the embodiments of this application, when repetition of RAR is supported, the length of the RAR window is extended, and whether a repetition of the RAR is allowed to exceed the RAR window is determined, so as to improve the RAR reception performance of the terminal.

For another example, in some embodiments, to allow the network to schedule Msg4 transmission multiple times within a contention resolution timer duration (contention resolution timer duration) (similar to multiple Msg4 transmissions within a contention resolution timer duration), the Msg4 transmission may also need to be completed as much as possible within the contention resolution timer duration. In the embodiments of this application, when repetition of Msg4 is supported, the length of the contention resolution timer duration is extended, and whether a repetition of Msg4 is allowed to exceed the contention resolution timer duration is determined, so as to improve the Msg4 reception performance of the terminal.

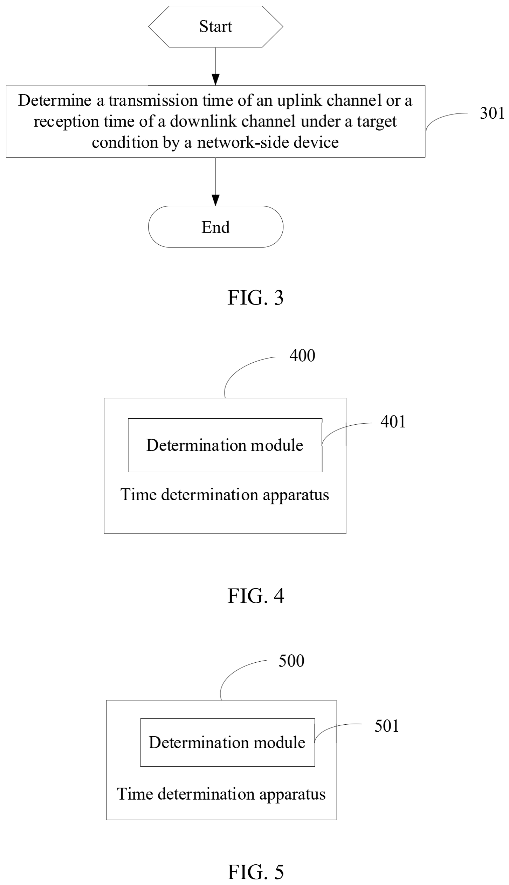

Referring to FIG. 3, FIG. 3 is a flowchart of another time determination method according to an embodiment of this application. As shown in FIG. 3, the method includes the following step:
step 301: A network-side device determines a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that needs to be transmitted to a terminal before the terminal enters the connected state; and
   the uplink channel is an uplink channel corresponding to the downlink channel.

That a network-side device determines a transmission time of an uplink channel or a reception time of a downlink channel may alternatively be understood as:
the network-side device determines a reception time of an uplink channel or a transmission time of a downlink channel.

Optionally, the downlink channel that needs to be transmitted to a terminal before the terminal enters a connected state includes at least one of the following:
a Message 2 Msg2 physical downlink shared channel PDSCH, a Message B MsgB PDSCH, a Message 4 Msg4 PDSCH, and a paging PDSCH.

Optionally, the uplink channel corresponding to the downlink channel includes at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
where the RAR includes at least one of the following: a RAR carried by Msg2 PDSCH and a RAR carried by MsgB PDSCH.

Optionally, in a case that the uplink channel includes the PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in repeated transmissions of the downlink channel; or
a transmission time determined based on a second reference time domain resource, where the second reference time domain resource corresponds to one time point of a RAR window, or the second reference time domain resource corresponds to one time point of an MsgB response window.

Optionally, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

Optionally, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

Optionally, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

Optionally, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

Optionally, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

Optionally, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

Optionally, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel; and
   the sixth reference time domain resource corresponds to one time point of a RAR window, or the sixth reference time domain resource corresponds to one time point of an MsgB response window.

Optionally, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

Optionally, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

Optionally, the reception time of the downlink channel includes at least one of the following:
a RAR window, an MsgB response window, and a contention resolution timer duration.

Optionally, the RAR window includes:
a RAR window defined for repeated transmission of the downlink channel; or a RAR window obtained by adding an offset to a RAR window not supporting repeated transmission of the downlink channel;
   or,
the MsgB response window includes:
   an MsgB response window defined for repeated transmission of the downlink channel; or an MsgB response window obtained by adding an offset to an MsgB response window not supporting repeated transmission of the downlink channel;
      or,
   the contention resolution timer duration includes:
      a contention resolution timer duration defined for repeated transmission of the downlink channel; or a contention resolution timer duration obtained by adding an offset to a contention resolution timer not supporting repeated transmission of the downlink channel.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
   or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

It should be noted that this embodiment is an implementation of the network-side device corresponding to the embodiment shown in FIG. 2. For a specific implementation of this embodiment, reference may be made to the related description of the embodiment shown in FIG. 2. To avoid repeated description, details will not be described again in this embodiment.

The method provided in the embodiments of this application is illustrated below through a plurality of embodiments:

### Embodiment 1

In this embodiment, the focus is on determining a transmission time of a PUSCH scheduled by a RAR, with details as follows:
when repeated transmission of RAR is supported, the reference slot for the transmission time of a PUSCH scheduled by the RAR may be a slot in which one of multiple RAR repetitions is located. Such a clearly determined reference slot ensures consistent understanding between the network and the terminal regarding the scheduling time.

In some embodiments, the reference slot for the transmission time of a PUSCH scheduled by a RAR (including a RAR in a 4-step RACH and a fallback RAR in a 2-step RACH) is a slot in which a predefined PDSCH repetition transmission carrying a RAR message is located.

For example, when repeated transmission of RAR PDSCH is supported, it is stipulated that the reference slot for determining a transmission time of a PUSCH scheduled by a RAR is a slot in which the last PDSCH repetition transmission is located. For example, the description is as follows:
for a reference slot of PUSCH transmission scheduled by a RAR UL grant, if a UE receives a PDSCH or a last repetition of PDSCH (if PDSCH repetition is supported), and a RAR message carried in the PDSCH corresponds to PRACH transmission from the terminal and ends in slot n, the terminal transmits the PUSCH in slot *n + k*₂ + Δ + *2^{µ} • K_{cell,offset},* where *k*₂ is a scheduled slot-level offset, Δ is a time offset specially defined for the PUSCH scheduled by the RAR UL grant and specifically stipulated in the protocol, *µ* indicates a subcarrier spacing configuration for PUSCH transmission, and *K_{cell,offset}* is provided by a cell-specific offset (*cellSpecificKoffset*) parameter; otherwise, *K_{cell,offset} =* 0.

As a sub-embodiment of a preceding embodiment, the predefined PDSCH repetition transmission needs to satisfy one or more of the following conditions:
being a slot in which PDSCH repetition is actually transmitted;
being a valid slot capable of transmitting PDSCH repetition;
being an available slot capable of transmitting PDSCH repetition; and
being a slot in which the last PDSCH repetition is located.

For example, the description is as follows:
for a reference slot of PUSCH transmission scheduled by a RAR UL grant, if a UE receives a PDSCH, and a RAR message carried in the PDSCH corresponds to PRACH transmission from the terminal and ends in slot n, or if the UE receives a last repetition of PDSCH (if PDSCH repetition is supported), and a RAR message carried in the PDSCH corresponds to PRACH transmission from the terminal and ends in an available slot n, the terminal transmits the PUSCH in slot n + *k*₂ + Δ + 2*^{µ}* • *K_{cell,offset},* where *k*₂ is a scheduled slot-level offset, Δ is a time offset specially defined for the PUSCH scheduled by a RAR UL grant and specifically stipulated in the protocol, *µ* indicates a subcarrier spacing configuration for PUSCH transmission, and *K_{cell,offset}* is provided by a cell-specific offset (cellSpecificKoffset) parameter; otherwise, *K_{cell,offset} =* 0.

In addition, considering that the corresponding PDSCH processing time differs depending on whether RAR is repeatedly transmitted, in this embodiment, the interval from a reception time of the RAR to the transmission time of a PUSCH scheduled by the RAR is enhanced.

In some embodiments, when repeated transmission of RAR is supported, one or more of the following changes need to be introduced for the interval from the reception time of the RAR to the transmission time of the PUSCH scheduled by the RAR, as compared with a case in which repeated transmission of RAR is not supported:
introducing an additional time requirement, for example, introducing a time offset (time offset);
additionally defining a processing time for RAR PDSCH repetition to replace *N*_{*T,*1}; and
additionally defining a PUSCH processing time for a case of RAR PDSCH repetition to replace *N*_{*T,*2}*.*

The new parameter or modified parameter may be configured by the network or stipulated in the protocol or determined by another parameter (for example, the number of repetitions of RAR PDSCH).

For example, the description is as follows:
UE may assume that a minimum time interval between the last symbol of a received PDSCH carrying a RAR or the last symbol of the received last PDSCH repetition carrying a RAR and a first symbol of PUSCH transmission scheduled by a corresponding RAR uplink grant is equal to *N*_{*T,*1} *+ N*_{*T,*2} + 0.5 *+ N*_{*T*,3} ms, where *N*_{*T,*1} represents a time length of *N*₁ symbols and is the time for the UE to process the downlink PDSCH, with the UE assumed to have processing capability level 1 and be configured with additional PDSCH demodulation reference signals; *N*_{*T,*2} represents a time length of *N*₂ symbols and is the time for the UE to process an uplink PUSCH, with the UE assumed to have processing capability level 1. The *N*₁ and *N*₂ symbols herein are determined by a smaller one of subcarrier spacings of PDSCH and PUSCH. For a subcarrier spacing of 15 kHz, the UE assumes *N*_{1,0} = 14. The time offset *N*_{*T*,3} herein is provided by a parameter incremental RAR repetition (*DeltaRARRepetition*) (if *DeltaRARRepetition* exists) in a case of PDSCH repetition, or otherwise is 0. *N*₁ and *N*₂ are specifically integers greater than or equal to 1.

In some embodiments, the reference slot for the transmission time of a PUSCH scheduled by a RAR (including a RAR in a 4-step RACH and a fallback RAR in a 2-step RACH) takes a specific time point within a RAR window as a reference, for example, a first slot at the start of the RAR window.

### Embodiment 2

In this embodiment, the focus is on determining a transmission time of a PUCCH for Msg4 HARQ-ACK feedback, with details as follows:
when repeated transmission of Msg4 is supported, the reference slot for the transmission time of a corresponding PUCCH for HARQ feedback may be a slot in which one of multiple Msg4 repetitions is located. Such a clearly determined reference slot ensures consistent understanding between the network and the terminal regarding the scheduling time.

In some embodiments, for transmission of HARQ feedback of Msg4 PDSCH, a reference time for a time interval between a reception time of Msg4 PDSCH and a transmission time of a corresponding PUCCH is a slot in which a predefined PDSCH repetition carrying a contention resolution ID is located.

For example, the description is as follows:
UE may assume that a minimum time interval between the last symbol of a received PDSCH or the last PDSCH repetition (if PDSCH repetition is supported) and the first symbol of PUCCH transmission carrying HARQ-ACK feedback information corresponding to the PDSCH is equal to *N*_{*T,*1} + 0.5 ms, where *N*_{*T,*1} represents a time length of *N*₁ symbols and is a time for the UE to process a downlink PDSCH, with the UE assumed to have processing capability level 1 and be configured with additional PDSCH demodulation reference signals. For a subcarrier spacing of 15 kHz, the UE assumes *N*_{1,0} = 14. *N*₁ is specifically an integer greater than or equal to 1.

As a sub-embodiment of a preceding embodiment, the predefined PDSCH repetition transmission needs to satisfy one or more of the following conditions:
being a slot in which PDSCH repetition is actually transmitted;
being a valid slot capable of transmitting PDSCH repetition;
being an available slot capable of transmitting PDSCH repetition; and
being a slot in which the last PDSCH repetition is located.

In some embodiments, for transmission of HARQ feedback of Msg4 PDSCH, a reference time for a time interval between a reception time of Msg4 PDSCH and a transmission time of a corresponding PUCCH is a slot in which a contention resolution timer is started or restarted.

### Embodiment 3

In this embodiment, the focus is on determining a transmission time of a PUCCH for MsgB HARQ-ACK feedback, with details as follows:
when repeated transmission of MsgB is supported, the reference slot for the transmission time of a corresponding PUCCH for HARQ feedback may be a slot in which one of multiple MsgB repetitions is located. Such a clearly determined reference slot ensures consistent understanding between the network and the terminal regarding the scheduling time.

In some embodiments, for transmission of HARQ feedback of MsgB PDSCH, a reference time for a time interval between a reception time of MsgB PDSCH and a transmission time of a corresponding PUCCH is a slot in which a predefined PDSCH repetition transmission carrying a contention resolution ID is located.

For example, the predefined PDSCH repetition herein is the last PDSCH repetition.

As a sub-embodiment of a preceding embodiment, the predefined PDSCH repetition transmission needs to satisfy one or more of the following conditions:
being a slot in which PDSCH repetition is actually transmitted;
being a valid slot capable of transmitting PDSCH repetition;
being an available slot capable of transmitting PDSCH repetition; and
being a slot in which the last PDSCH repetition is located.

In some embodiments, for transmission of HARQ feedback of MsgB PDSCH, a reference time for a time interval between a reception time of MsgB PDSCH and a transmission time of a corresponding PUCCH is a specific time point within an MsgB window, for example, a slot in which a start point of an MsgB response window is located.

### Embodiment 4

In this embodiment, the focus is on enhancement of a RAR window when Msg2/MsgB repetition is performed, with details as follows:
in this embodiment, to allow the network to perform multiple transmissions of the PDCCH scheduling RAR and multiple transmissions of the RAR within a RAR window (similar to multiple RAR transmissions within the RAR window), the RAR transmission may also need to be completed as much as possible within the RAR window. When repetition of RAR is supported, in this embodiment, a length of the RAR window is extended. In addition, it is determined whether a repetition of the RAR is allowed to exceed the RAR window.

In some embodiments, when Msg2/MsgB repetition is performed, the length of the RAR window is enhanced in one or more of the following methods:
additionally defining a size of the RAR window dedicated to supporting Msg2/MsgB repetition;
introducing an additional RAR window size offset relative to a size of a RAR window not supporting Msg2/MsgB repetition, which may be predefined by the protocol or configured by the network.

In some embodiments, when Msg2/MsgB repetition is performed, reception of Msg2/MsgB repetition is not allowed to span the RAR window.

In some embodiments, when Msg2/MsgB repetition is performed, whether reception of Msg2/MsgB repetition is allowed to span the RAR window depends on one of the following factors:
network configuration; and
the number of repetitions of Msg2/MsgB.

### Embodiment 5

In this embodiment, the focus is on enhancement of a contention resolution timer duration when Msg4 repetition is performed, with details as follows:
in this embodiment, to allow the network to schedule Msg4 transmission multiple times within a contention resolution timer duration (similar to multiple Msg4 transmissions within a contention resolution timer duration), the Msg4 transmission may also need to be completed as much as possible within the contention resolution timer duration. When repetition of Msg4 is supported, in this embodiment, the length of the contention resolution timer duration is extended. In addition, it is determined whether a repetition of Msg4 is allowed to exceed the contention resolution timer duration.

In some embodiments, when Msg4 repetition is performed, the length of the contention resolution timer duration is enhanced in one or more of the following methods:
additionally defining a size of a contention resolution timer duration dedicated to supporting Msg4 repetition;
introducing an additional contention resolution timer duration size offset relative to a size of a RAR window not supporting Msg4 repetition, which may be predefined by the protocol or configured by the network.

In some embodiments, when Msg4 repetition is performed, reception of Msg4 repetition is not allowed to exceed the contention resolution timer duration.

In some embodiments, when Msg4 repetition is performed, whether reception of Msg4 repetition is allowed to exceed the contention resolution timer duration depends on one of the following factors:
network configuration; and
the number of repetitions of Msg4.

The embodiments of this application can achieve the enhancement of Msg2/MsgB/Msg4 PDSCH under NTN scenarios, be applied to enhancement of Msg2/MsgB/Msg4 PDSCH in TN networks, and be adapted to all downlink channels prior to the terminal entering the RRC-connected state.

In the embodiments of this application, a plurality of methods for determining uplink and downlink scheduling times for Msg2/MsgB/Msg4 PDSCH repetition are proposed, enabling the network and the terminal to maintain consistent understanding of scheduling times of uplink and downlink channels, thereby ensuring that related channels can be correctly received. In addition, in the embodiments of this application, while ensuring that Msg2, MsgB, and Msg4 can use time domain repetition to improve robustness, a time window for receiving RAR and Msg4 is maintained within a specific controllable range, reducing random-access latency and reducing terminal reception complexity.

The time determination method provided in the embodiments of this application may be executed by a time determination apparatus. In the embodiments of this application, the time determination apparatus executing the time determination method is used as an example to describe the time determination apparatus provided in the embodiments of this application.

Referring to FIG. 4, FIG. 4 is a structural diagram of a time determination apparatus according to an embodiment of this application. As shown in FIG. 4, a time determination apparatus 400 includes:
a determination module 401, configured to determine a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that a terminal needs to receive before entering a connected state; and
   the uplink channel is an uplink channel corresponding to the downlink channel.

Optionally, the downlink channel that a terminal needs to receive before entering a connected state includes at least one of the following:
a Message 2 Msg2 physical downlink shared channel PDSCH, a Message B MsgB PDSCH, a Message 4 Msg4 PDSCH, and a paging PDSCH.

Optionally, the uplink channel corresponding to the downlink channel includes at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
where the RAR includes at least one of the following: a RAR carried by Msg2 PDSCH and a RAR carried by MsgB PDSCH.

Optionally, in a case that the uplink channel includes the PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in the repeated transmissions of the downlink channel; or
a transmission time determined based on a second reference time domain resource, where the second reference time domain resource corresponds to one time point of a RAR window, or the second reference time domain resource corresponds to one time point of an MsgB response window.

Optionally, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

Optionally, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

Optionally, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

Optionally, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

Optionally, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

Optionally, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

Optionally, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel; and
   the sixth reference time domain resource corresponds to one time point of a RAR window, or the sixth reference time domain resource corresponds to one time point of an MsgB response window.

Optionally, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

Optionally, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

Optionally, the reception time of the downlink channel includes at least one of the following:
a RAR window, an MsgB response window, and a contention resolution timer duration.

Optionally, the RAR window includes:
a RAR window defined for repeated transmission of the downlink channel; or a RAR window obtained by adding an offset to a RAR window not supporting repeated transmission of the downlink channel;
   or,
the MsgB response window includes:
   an MsgB response window defined for repeated transmission of the downlink channel; or an MsgB response window obtained by adding an offset to an MsgB response window not supporting repeated transmission of the downlink channel;
      or,
   the contention resolution timer duration includes:
      a contention resolution timer duration defined for repeated transmission of the downlink channel; or a contention resolution timer duration obtained by adding an offset to a contention resolution timer not supporting repeated transmission of the downlink channel.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
   or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

The foregoing time determination apparatus can improve the service performance of a terminal.

The time determination apparatus in the embodiments of this application may be an electronic device, such as an electronic device with an operating system, or a component in an electronic device such as an integrated circuit or a chip. The electronic device may be a terminal or a device other than a terminal. For example, the terminal may include, but is not limited to, the types of terminals listed above, and the other device may be a server, a network attached storage (Network Attached Storage, NAS), or the like. This is not specifically limited in the embodiments of this application.

The time determination apparatus provided in the embodiments of this application can implement the processes implemented in the method embodiment in FIG. 2, with the same technical effects achieved. To avoid repetition, details are not repeated herein.

Referring to FIG. 5, FIG. 5 is a structural diagram of another time determination apparatus according to an embodiment of this application. As shown in FIG. 5, a time determination apparatus 500 includes:
a determination module 501, configured to determine a transmission time of an uplink channel or a reception time of a downlink channel under a target condition;
where the target condition includes at least one of the following:
   the downlink channel is repeatedly transmitted, and the downlink channel supports repeated transmission;
   the downlink channel includes: a downlink channel that needs to be transmitted to a terminal before the terminal enters the connected state; and
   the uplink channel is an uplink channel corresponding to the downlink channel.

Optionally, the downlink channel that needs to be transmitted to a terminal before the terminal enters the connected state includes at least one of the following:
a Message 2 Msg2 physical downlink shared channel PDSCH, a Message B MsgB PDSCH, a Message 4 Msg4 PDSCH, and a paging PDSCH.

Optionally, the uplink channel corresponding to the downlink channel includes at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
where the RAR includes at least one of the following: a RAR carried by Msg2 PDSCH and a RAR carried by MsgB PDSCH.

Optionally, in a case that the uplink channel includes the PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in the repeated transmissions of the downlink channel; or
a transmission time determined based on a second reference time domain resource, where the second reference time domain resource corresponds to one time point of a RAR window, or the second reference time domain resource corresponds to one time point of an MsgB response window.

Optionally, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

Optionally, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

Optionally, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

Optionally, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

Optionally, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

Optionally, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

Optionally, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel;
   the sixth reference time domain resource corresponds to one time point of a RAR window, or the sixth reference time domain resource corresponds to one time point of an MsgB response window.

Optionally, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

Optionally, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

Optionally, the reception time of the downlink channel includes at least one of the following:
a RAR window, an MsgB response window, and a contention resolution timer duration.

Optionally, the RAR window includes:
a RAR window defined for repeated transmission of the downlink channel; or a RAR window obtained by adding an offset to a RAR window not supporting repeated transmission of the downlink channel;
   or,
the MsgB response window includes:
   an MsgB response window defined for repeated transmission of the downlink channel; or an MsgB response window obtained by adding an offset to an MsgB response window not supporting repeated transmission of the downlink channel;
      or,
   the contention resolution timer duration includes:
      a contention resolution timer duration defined for repeated transmission of the downlink channel; or a contention resolution timer duration obtained by adding an offset to a contention resolution timer not supporting repeated transmission of the downlink channel.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
   or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

The foregoing time determination apparatus can improve the service performance of a terminal.

The time determination apparatus in the embodiments of this application may be an electronic device such as an electronic device with an operating system, or a component in an electronic device such as an integrated circuit or a chip. The electronic device may be a terminal or a network-side device.

The time determination apparatus provided in the embodiments of this application can implement the processes implemented in the method embodiment in FIG. 3, with the same technical effects achieved. To avoid repetition, details are not repeated herein.

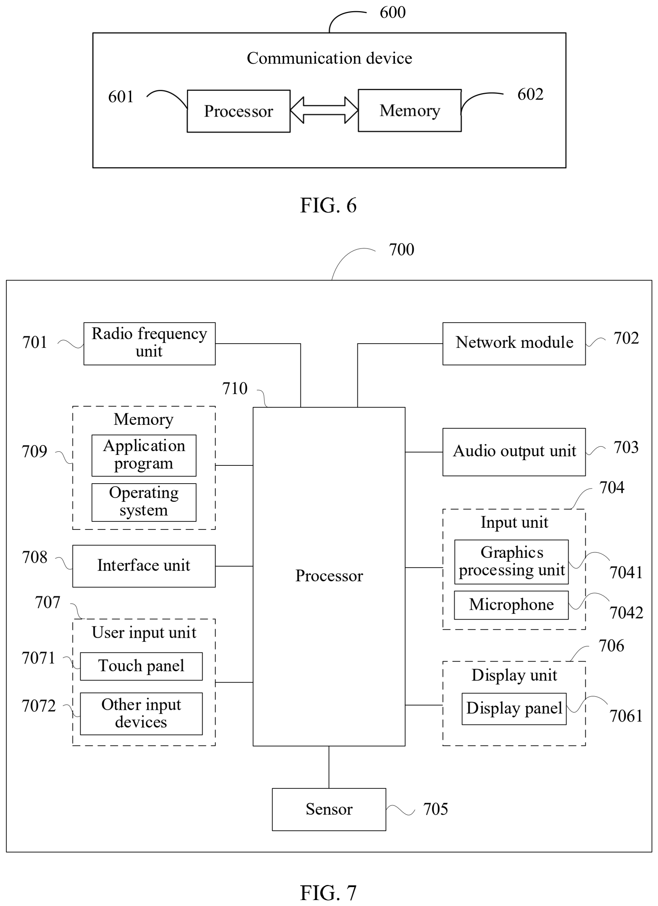

Optionally, as shown in FIG. 6, an embodiment of this application further provides a communication device 600, including a processor 601 and a memory 602. The memory 602 stores a program or an instruction capable of running on the processor 601. For example, when the communication device 600 is a terminal, the program or the instruction is executed by the processor 601 to implement the steps of the foregoing embodiments of the time determination method on the terminal side, with the same technical effects achieved. When the communication device 600 is a network-side device, when the program or the instruction is executed by the processor 601, the steps of the foregoing embodiments of the time determination method on the network-side device side are implemented, with the same technical effects achieved. To avoid repetition, details are not repeated herein.

An embodiment of this application further provides a terminal, including a processor and a communication interface, where the processor is configured to determine a transmission time of an uplink channel or a reception time of a downlink channel under a target condition; where the target condition includes at least one of the following: the downlink channel is repeatedly transmitted, and the downlink channel supports repeated transmission; the downlink channel includes: a downlink channel that the terminal needs to receive before entering a connected state; and the uplink channel is an uplink channel corresponding to the downlink channel. Specifically, FIG. 7 is a schematic diagram of a hardware structure of a terminal for implementing the embodiments of this application.

The terminal 700 includes but is not limited to at least part of these components: such as a radio frequency unit 701, a network module 702, an audio output unit 703, an input unit 704, a sensor 705, a display unit 706, a user input unit 707, an interface unit 708, a memory 709, and a processor 710.

Persons skilled in the art can understand that the terminal 700 may further include a power supply (for example, a battery) that supplies power to various components. The power supply may be logically connected to the processor 710 through a power management system, to implement functions such as charging management, discharging management, and power consumption management by using the power management system. The structure of the communication device shown in FIG. 7 does not constitute a limitation on the terminal, and the terminal may include more or fewer components than shown in the figure, or combine some components, or have different component arrangements. Details are not described herein.

It should be understood that in this embodiment of this application, the input unit 704 may include a graphics processing unit (Graphics Processing Unit, GPU) 7041 and a microphone 7042. The graphics processing unit 7041 processes image data of a static picture or a video obtained by an image capture apparatus (for example, a camera) in a video capture mode or an image capture mode. The display unit 706 may include a display panel 7061, and the display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include, but are not limited to, a physical keyboard, a function key (for example, a volume control key or an on/off key), a trackball, a mouse, and a joystick. Details are not described herein.

In this embodiment of this application, the radio frequency unit 701 receives downlink data from a network-side device and then transmits the downlink data to the processor 710 for processing; and transmits uplink data to the network-side device. Usually, the radio frequency unit 701 includes, but is not limited to, an antenna, an amplifier, a transceiver, a coupler, a low noise amplifier, and a duplexer.

The memory 709 may be configured to store a software program or an instruction and various data. The memory 709 may mainly include a first storage area for storing a program or an instruction and a second storage area for storing data. The first storage area may store an operating system and an application program or an instruction required by at least one function (for example, a sound play function or an image play function). In addition, the memory 709 may include a volatile memory or a non-volatile memory, or the memory 709 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 in this embodiment of this application includes but is not limited to these and any other appropriate type of memory.

The processor 710 may include one or more processing units. Optionally, the processor 710 may be integrated with an application processor and a modem processor. The application processor mainly processes operations related to an operating system, a user interface, an application program, and the like. The modem processor mainly processes wireless communication signals, for example, a baseband processor. It can be understood that the modem processor may alternatively not be integrated into the processor 710.

The processor 710 or the radio frequency unit 701 is configured to determine a transmission time of an uplink channel or a reception time of a downlink channel under a target condition;
where the target condition includes at least one of the following:
the downlink channel is repeatedly transmitted, and the downlink channel supports repeated transmission;
the downlink channel includes: a downlink channel that the terminal needs to receive before entering a connected state; and
the uplink channel is an uplink channel corresponding to the downlink channel.

Optionally, the downlink channel that the terminal needs to receive before entering the connected state includes at least one of the following:
a Message 2 Msg2 physical downlink shared channel PDSCH, a Message B MsgB PDSCH, a Message 4 Msg4 PDSCH, and a paging PDSCH.

Optionally, the uplink channel corresponding to the downlink channel includes at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
where the RAR includes at least one of the following: a RAR carried by Msg2 PDSCH and a RAR carried by MsgB PDSCH.

Optionally, in a case that the uplink channel includes the PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in the repeated transmissions of the downlink channel; or
a transmission time determined based on a second reference time domain resource, where the second reference time domain resource corresponds to one time point of a RAR window, or the second reference time domain resource corresponds to one time point of an MsgB response window.

Optionally, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

Optionally, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

Optionally, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

Optionally, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

Optionally, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

Optionally, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

Optionally, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel;
   the sixth reference time domain resource corresponds to one time point of a RAR window, or the sixth reference time domain resource corresponds to one time point of an MsgB response window.

Optionally, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

Optionally, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

Optionally, the reception time of the downlink channel includes at least one of the following:
a RAR window, an MsgB response window, and a contention resolution timer duration.

Optionally, the RAR window includes:
a RAR window defined for repeated transmission of the downlink channel; or a RAR window obtained by adding an offset to a RAR window not supporting repeated transmission of the downlink channel;
   or,
the MsgB response window includes:
   an MsgB response window defined for repeated transmission of the downlink channel; or an MsgB response window obtained by adding an offset to an MsgB response window not supporting repeated transmission of the downlink channel;
      or,
   the contention resolution timer duration includes:
      a contention resolution timer duration defined for repeated transmission of the downlink channel; or a contention resolution timer duration obtained by adding an offset to a contention resolution timer not supporting repeated transmission of the downlink channel.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
   or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

The foregoing terminal can improve the service performance of a terminal.

It can be understood that implementation processes of the foregoing implementations can refer to related descriptions in the foregoing method embodiments, with the same or corresponding technical effects achieved. To avoid repetition, details are not repeated herein.

An embodiment of this application further provides a network-side device, including a processor and a communication interface, where the processor is configured to determine a transmission time of an uplink channel or a reception time of a downlink channel under a target condition; where the target condition includes at least one of the following: the downlink channel is repeatedly transmitted, and the downlink channel supports repeated transmission; the downlink channel includes: a downlink channel that needs to be transmitted to a terminal before the terminal enters the connected state; and the uplink channel is an uplink channel corresponding to the downlink channel.

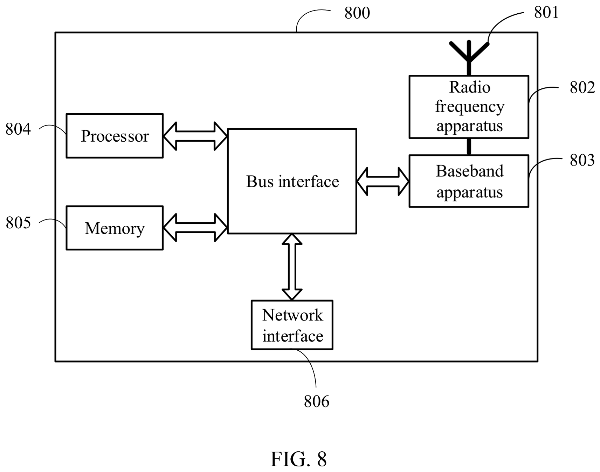

As shown in FIG. 8, the network-side device 800 includes an antenna 801, a radio frequency apparatus 802, a baseband apparatus 803, a processor 804, and a memory 805. The antenna 801 is connected to the radio frequency apparatus 802. In an uplink direction, the radio frequency apparatus 802 receives information through the antenna 801 and transmits the received information to the baseband apparatus 803 for processing. In a downlink direction, the baseband apparatus 803 processes information to be transmitted and transmits the information to the radio frequency apparatus 802, and the radio frequency apparatus 802 processes the received information and then transmits the information out through the antenna 801.

The method performed by a radio access network device in the foregoing embodiment may be implemented in the baseband apparatus 803, and the baseband apparatus 803 includes a baseband processor.

For example, the baseband apparatus 803 may include at least one baseband board, and a plurality of chips are disposed on the baseband board. As shown in FIG. 8, one of the chips is, for example, a baseband processor, and is connected to the memory 805 through a bus interface, to invoke a program in the memory 805 to perform operations of the network device shown in the foregoing method embodiment.

The radio access network device may further include a network interface 806, for example, a common public radio interface (common public radio interface, CPRI).

Specifically, the network-side device 800 in this embodiment of this application further includes an instruction or a program stored in the memory 805 and capable of running on the processor 804. The processor 804 invokes the instruction or the program in the memory 805 to execute the method executed by the modules shown in FIG. 5, with the same technical effects achieved. To avoid repetition, details are not repeated herein.

The processor 804 or the radio frequency apparatus 802 is configured to determine a transmission time of an uplink channel or a reception time of a downlink channel under a target condition;
where the target condition includes at least one of the following:
the downlink channel is repeatedly transmitted, and the downlink channel supports repeated transmission;
the downlink channel includes: a downlink channel that needs to be transmitted to a terminal before the terminal enters the connected state; and
the uplink channel is an uplink channel corresponding to the downlink channel.

Optionally, the downlink channel that needs to be transmitted to a terminal before the terminal enters the connected state includes at least one of the following:
a Message 2 Msg2 physical downlink shared channel PDSCH, a Message B MsgB PDSCH, a Message 4 Msg4 PDSCH, and a paging PDSCH.

Optionally, the uplink channel corresponding to the downlink channel includes at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
where the RAR includes at least one of the following: a RAR carried by Msg2 PDSCH and a RAR carried by MsgB PDSCH.

Optionally, in a case that the uplink channel includes the PUSCH scheduled by the RAR, the transmission time of the PUSCH scheduled by the RAR includes:
a transmission time determined based on a first reference time domain resource, where the first reference time domain resource is a time domain resource corresponding to a first PDSCH carrying the RAR, and the first PDSCH is one transmission in the repeated transmissions of the downlink channel; or
a transmission time determined based on a second reference time domain resource, where the second reference time domain resource corresponds to one time point of a RAR window, or the second reference time domain resource corresponds to one time point of an MsgB response window.

Optionally, the time domain resource corresponding to the first PDSCH includes at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

Optionally, the first PDSCH is an nth transmission in the repeated transmissions of the downlink channel, where n is greater than or equal to 1 and less than or equal to the number of repetitions of the downlink channel; or
the first PDSCH is a last transmission in the repeated transmissions of the downlink channel.

Optionally, in a case that the uplink channel includes the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
   or,
in a case that the uplink channel includes the PUSCH scheduled by the RAR, a minimum time interval from a reception time of the RAR to the transmission time of the PUSCH scheduled by the RAR is one of the following:
   a first minimum time interval plus a target time;
   a second minimum time interval determined based on a first processing time; and
   a third minimum time interval determined based on a second processing time;
   where the first processing time is a processing time for repeated transmission of the downlink channel, and the second processing time is a PUSCH processing time in a case that the downlink channel is repeatedly transmitted.

Optionally, in a case that the uplink channel includes a PUCCH for feeding back a HARQ-ACK of Msg4, a time interval from a reception time of Msg4 to a transmission time of the PUCCH for feeding back the HARQ-ACK of the Msg4 includes:
a time interval determined based on a third reference time domain resource; or a time interval determined based on a fourth reference time domain resource;
   or,
in a case that the uplink channel includes a PUCCH for feeding back a HARQ-ACK of Msg4, a minimum time interval from a reception time of Msg4 to a transmission time of the PUCCH for feeding back the HARQ-ACK of the Msg4 includes:
   a minimum time interval determined based on a third reference time domain resource; or a minimum time interval determined based on a fourth reference time domain resource;
   where the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

Optionally, the time domain resource corresponding to the second PDSCH includes at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

Optionally, the second PDSCH is an nth transmission in the repeated transmissions of the downlink channel, where n is greater than or equal to 1 and less than or equal to the number of repetitions of the downlink channel; or
the second PDSCH is a last transmission in the repeated transmissions of the downlink channel.

Optionally, in a case that the uplink channel includes a PUCCH for feeding back a HARQ-ACK of MsgB, a time interval from a reception time of MsgB to a transmission time of the PUCCH for feeding back the HARQ-ACK of the MsgB includes:
a time interval determined based on a fifth reference time domain resource; or a time interval determined based on a sixth reference time domain resource;
   or,
in a case that the uplink channel includes a PUCCH for feeding back a HARQ-ACK of MsgB, a minimum time interval from a reception time of MsgB to a transmission time of the PUCCH for feeding back the HARQ-ACK of the MsgB includes:
   a minimum time interval determined based on a fifth reference time domain resource; or a minimum time interval determined based on a sixth reference time domain resource;
   where the fifth reference time domain resource is a time domain resource corresponding to a third PDSCH carrying a contention resolution identifier, and the third PDSCH is one transmission in the repeated transmissions of the downlink channel;
   the sixth reference time domain resource corresponds to one time point of a RAR window, or the sixth reference time domain resource corresponds to one time point of an MsgB response window.

Optionally, the time domain resource corresponding to the third PDSCH includes at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

Optionally, the third PDSCH is an nth transmission in the repeated transmissions of the downlink channel, where n is greater than or equal to 1 and less than or equal to the number of repetitions of the downlink channel; or
the third PDSCH is a last transmission in the repeated transmissions of the downlink channel.

Optionally, the reception time of the downlink channel includes at least one of the following:
a RAR window, an MsgB response window, and a contention resolution timer duration.

Optionally, the RAR window includes:
a RAR window defined for repeated transmission of the downlink channel; or a RAR window obtained by adding an offset to a RAR window not supporting repeated transmission of the downlink channel;
   or,
the MsgB response window includes:
   an MsgB response window defined for repeated transmission of the downlink channel; or an MsgB response window obtained by adding an offset to an MsgB response window not supporting repeated transmission of the downlink channel;
      or,
   the contention resolution timer duration includes:
      a contention resolution timer duration defined for repeated transmission of the downlink channel; or a contention resolution timer duration obtained by adding an offset to a contention resolution timer not supporting repeated transmission of the downlink channel.

Optionally, reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
   or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

The foregoing network-side device can improve the service performance of a terminal.

An embodiment of this application further provides a readable storage medium. The readable storage medium stores a program or an instruction, and when the program or the instruction is executed by a processor, the processes of the foregoing embodiments of the time determination method are implemented, with the same technical effects achieved. To avoid repetition, details are not repeated herein.

The processor is a processor in the terminal in the foregoing embodiment. The readable storage medium includes a computer-readable storage medium, for example, a computer read-only memory ROM, a random-access memory RAM, a magnetic disk, or an optical disk. In some examples, the readable storage medium may be a non-transient readable storage medium.

An embodiment of this application further provides a chip. The chip includes a processor and a communication interface, the communication interface is coupled to the processor, and the processor is configured to run a program or an instruction to implement the processes of the foregoing embodiments of the time determination method, with the same technical effects achieved. To avoid repetition, details are not repeated herein.

It should be understood that the chip mentioned in this embodiment of this application may also be referred to as a system-level chip, a system chip, a chip system, a system on chip, or the like.

An embodiment of this application further provides a computer program/program product. The computer program/program product is stored in a storage medium, and the computer program/program product is executed by at least one processor to implement the processes of the foregoing embodiments of the time determination method, with the same technical effects achieved. To avoid repetition, details are not repeated herein.

An embodiment of this application further provides a wireless communication system, including a terminal and a network-side device, where the terminal can be configured to perform the steps of the time determination method on the terminal side provided in the embodiments of this application, and the network-side device can be configured to perform the steps of the time determination method on the network-side device side provided in the embodiments of this application.

It should be noted that in this specification, the term "include", "comprise", or any other variant thereof is intended to cover a non-exclusive inclusion, so that a process, method, article, or apparatus that includes a series of elements includes not only those elements but also other elements that are not explicitly listed, or includes elements inherent to such a process, method, article, or apparatus. An element limited by the statement "including one..." does not, without more constraints, preclude the presence of additional identical elements in the process, method, article, or apparatus that includes the element. In addition, it should be noted that the scope of the method and apparatus in the implementations of this application is not limited to performing functions in the order shown or discussed, but may also include performing functions in a substantially simultaneous manner or in a reverse order depending on the functions involved. For example, the described method may be performed in an order different from that described, and various steps may also be added, omitted, or combined. In addition, features described with reference to some examples may be combined in other examples.

From the description of the foregoing implementations, persons skilled in the art can clearly understand that the methods in the foregoing embodiments may be implemented by using a computer software product in combination with a necessary universal hardware platform, and certainly may also be implemented by hardware. The computer software product is stored in a storage medium (such as a ROM, a RAM, a magnetic disk, or an optical disk), and includes several instructions for enabling a terminal or a network-side device to execute the methods described in the embodiments of this application.

The embodiments of this application have been described above with reference to the accompanying drawings; however, this application is not limited to the foregoing specific implementations. The foregoing specific implementations are merely exemplary and not restrictive. Under the enlightenment of this application and without departing from the purpose of this application and the protection scope of the claims, persons of ordinary skill in the art may make many forms of implementations, and all such forms fall within the protection scope of this application.

## Claims

1. A time determination method, comprising:
determining, by a terminal, a transmission time of an uplink channel or a reception time of a downlink channel under a target condition;
wherein the target condition comprises at least one of the following:
the downlink channel is repeatedly transmitted, and the downlink channel supports repeated transmission;
the downlink channel comprises: a downlink channel that the terminal needs to receive before entering a connected state; and
the uplink channel is an uplink channel corresponding to the downlink channel.

2. The method according to claim 1, wherein the downlink channel that the terminal needs to receive before entering the connected state comprises at least one of the following:
a Message 2 Msg2 physical downlink shared channel PDSCH, a Message B MsgB PDSCH, a Message 4 Msg4 PDSCH, and a paging PDSCH.

3. The method according to claim 1 or 2, wherein the uplink channel corresponding to the downlink channel comprises at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
wherein the RAR comprises at least one of the following: a RAR carried by Msg2 PDSCH and a RAR carried by MsgB PDSCH.

4. The method according to claim 3, wherein in a case that the uplink channel comprises a PUSCH scheduled by the RAR, the transmission time of the PUSCH scheduled by the RAR comprises:
a transmission time determined based on a first reference time domain resource, wherein the first reference time domain resource is a time domain resource corresponding to a first PDSCH carrying the RAR, and the first PDSCH is one transmission in repeated transmissions of the downlink channel; or
a transmission time determined based on a second reference time domain resource, wherein the second reference time domain resource corresponds to one time point of a RAR window, or the second reference time domain resource corresponds to one time point of an MsgB response window.

5. The method according to claim 4, wherein the time domain resource corresponding to the first PDSCH comprises at least one of the following:
a time domain resource on which the first PDSCH is actually transmitted;
a valid time domain resource capable of transmitting the first PDSCH;
an available time domain resource capable of transmitting the first PDSCH; and
a time domain resource in which the first PDSCH is located.

6. The method according to claim 4 or 5, wherein the first PDSCH is an nth transmission in the repeated transmissions of the downlink channel, wherein n is greater than or equal to 1 and less than or equal to the number of repetitions of the downlink channel; or
the first PDSCH is a last transmission in the repeated transmissions of the downlink channel.

7. The method according to any one of claims 3 to 6, wherein in a case that the uplink channel comprises the PUSCH scheduled by the RAR, a time interval from a reception time of the RAR to the transmission time of the PUSCH scheduled by the RAR is one of the following:
a first time interval plus a target time;
a second time interval determined based on a first processing time;
a third time interval determined based on a second processing time;
or,
in a case that the uplink channel comprises the PUSCH scheduled by the RAR, a minimum time interval from a reception time of the RAR to the transmission time of the PUSCH scheduled by the RAR is one of the following:
a first minimum time interval plus a target time;
a second minimum time interval determined based on a first processing time; and
a third minimum time interval determined based on a second processing time;
wherein the first processing time is a processing time for repeated transmission of the downlink channel, and the second processing time is a PUSCH processing time in a case that the downlink channel is repeatedly transmitted.

8. The method according to claim 3, wherein in a case that the uplink channel comprises a PUCCH for feeding back a HARQ-ACK of Msg4, a time interval from a reception time of Msg4 to a transmission time of the PUCCH for feeding back the HARQ-ACK of the Msg4 comprises:
a time interval determined based on a third reference time domain resource; or a time interval determined based on a fourth reference time domain resource;
or,
in a case that the uplink channel comprises a PUCCH for feeding back a HARQ-ACK of Msg4, a minimum time interval from a reception time of Msg4 to a transmission time of the PUCCH for feeding back the HARQ-ACK of the Msg4 comprises:
a minimum time interval determined based on a third reference time domain resource; or a minimum time interval determined based on a fourth reference time domain resource;
wherein the third reference time domain resource is a time domain resource corresponding to a second PDSCH carrying a contention resolution identifier, the second PDSCH is one transmission in the repeated transmissions of the downlink channel, and the fourth reference time domain resource is a time domain resource in which a contention resolution timer is started or restarted.

9. The method according to claim 8, wherein the time domain resource corresponding to the second PDSCH comprises at least one of the following:
a time domain resource on which the second PDSCH is actually transmitted;
a valid time domain resource capable of transmitting the second PDSCH;
an available time domain resource capable of transmitting the second PDSCH; and
a time domain resource in which the second PDSCH is located.

10. The method according to claim 8 or 9, wherein the second PDSCH is an nth transmission in the repeated transmissions of the downlink channel, wherein n is greater than or equal to 1 and less than or equal to the number of repetitions of the downlink channel; or
the second PDSCH is a last transmission in the repeated transmissions of the downlink channel.

11. The method according to claim 3, wherein in a case that the uplink channel comprises a PUCCH for feeding back a HARQ-ACK of MsgB, a time interval from a reception time of MsgB to a transmission time of the PUCCH for feeding back the HARQ-ACK of the MsgB comprises:
a time interval determined based on a fifth reference time domain resource; or a time interval determined based on a sixth reference time domain resource;
or,
in a case that the uplink channel comprises a PUCCH for feeding back a HARQ-ACK of MsgB, a minimum time interval from a reception time of MsgB to a transmission time of the PUCCH for feeding back the HARQ-ACK of the MsgB comprises:
a minimum time interval determined based on a fifth reference time domain resource; or a minimum time interval determined based on a sixth reference time domain resource;
wherein the fifth reference time domain resource is a time domain resource corresponding to a third PDSCH carrying a contention resolution identifier, and the third PDSCH is one transmission in the repeated transmissions of the downlink channel; and
the sixth reference time domain resource corresponds to one time point of a RAR window, or the sixth reference time domain resource corresponds to one time point of an MsgB response window.

12. The method according to claim 11, wherein the time domain resource corresponding to the third PDSCH comprises at least one of the following:
a time domain resource on which the third PDSCH is actually transmitted;
a valid time domain resource capable of transmitting the third PDSCH;
an available time domain resource capable of transmitting the third PDSCH; and
a time domain resource in which the third PDSCH is located.

13. The method according to claim 11 or 12, wherein the third PDSCH is an nth transmission in the repeated transmissions of the downlink channel, wherein n is greater than or equal to 1 and less than or equal to the number of repetitions of the downlink channel; or
the third PDSCH is a last transmission in the repeated transmissions of the downlink channel.

14. The method according to any one of claims 1 to 13, wherein the reception time of the downlink channel comprises at least one of the following:
a RAR window, an MsgB response window, and a contention resolution timer duration.

15. The method according to claim 14, wherein the RAR window comprises:
a RAR window defined for repeated transmission of the downlink channel; or a RAR window obtained by adding an offset to a RAR window not supporting repeated transmission of the downlink channel;
or,
the MsgB response window comprises:
an MsgB response window defined for repeated transmission of the downlink channel; or an MsgB response window obtained by adding an offset to an MsgB response window not supporting repeated transmission of the downlink channel;
or,
the contention resolution timer duration comprises:
a contention resolution timer duration defined for repeated transmission of the downlink channel; or a contention resolution timer duration obtained by adding an offset to a contention resolution timer not supporting repeated transmission of the downlink channel.

16. The method according to claim 14 or 15, wherein reception of repeated transmission of the downlink channel is not allowed to span the RAR window; or whether reception of repeated transmission of the downlink channel is allowed to span the RAR window is determined based on at least one of the following: a network-side configuration and the number of repetitions of the downlink channel;
or,
reception of repeated transmission of the downlink channel is not allowed to span the MsgB response window; or whether reception of repeated transmission of the downlink channel is allowed to span the MsgB response window is determined based on at least one of the following: a network-side configuration and the number of repetitions of the downlink channel;
or,
reception of repeated transmission of the downlink channel is not allowed to span the contention resolution timer duration; or whether reception of repeated transmission of the downlink channel is allowed to span the contention resolution timer duration is determined based on at least one of the following: a network-side configuration and the number of repetitions of the downlink channel.

17. A time determination method, comprising:
determining, by a network-side device, a transmission time of an uplink channel or a reception time of a downlink channel under a target condition;
wherein the target condition comprises at least one of the following:
the downlink channel is repeatedly transmitted, and the downlink channel supports repeated transmission;
the downlink channel comprises: a downlink channel that needs to be transmitted to a terminal before the terminal enters a connected state; and
the uplink channel is an uplink channel corresponding to the downlink channel.

18. The method according to claim 17, wherein the downlink channel that needs to be transmitted to a terminal before the terminal enters the connected state comprises at least one of the following:
a Message 2 Msg2 physical downlink shared channel PDSCH, a Message B MsgB PDSCH, a Message 4 Msg4 PDSCH, and a paging PDSCH.

19. The method according to claim 17 or 18, wherein the uplink channel corresponding to the downlink channel comprises at least one of the following:
a physical uplink shared channel PUSCH scheduled by a random-access response RAR, a physical uplink control channel PUCCH for feeding back a hybrid automatic repeat request acknowledgement HARQ-ACK of Msg4, and a PUCCH for feeding back a HARQ-ACK of MsgB;
wherein the RAR comprises at least one of the following: a RAR carried by Msg2 PDSCH and a RAR carried by MsgB PDSCH.

20. The method according to any one of claims 17 to 19, wherein the reception time of the downlink channel comprises at least one of the following:
a RAR window, an MsgB response window, and a contention resolution timer duration.

21. A time determination apparatus, comprising:
a determination module, configured to determine a transmission time of an uplink channel or a reception time of a downlink channel under a target condition;
wherein the target condition comprises at least one of the following:
the downlink channel is repeatedly transmitted, and the downlink channel supports repeated transmission;
the downlink channel comprises: a downlink channel that a terminal needs to receive before entering a connected state; and
the uplink channel is an uplink channel corresponding to the downlink channel.

22. A time determination apparatus, comprising:
a determination module, configured to determine a transmission time of an uplink channel or a reception time of a downlink channel under a target condition;
wherein the target condition comprises at least one of the following:
the downlink channel is repeatedly transmitted, and the downlink channel supports repeated transmission;
the downlink channel comprises: a downlink channel that needs to be transmitted to a terminal before the terminal enters a connected state; and
the uplink channel is an uplink channel corresponding to the downlink channel.

23. A terminal, comprising a processor and a memory, wherein the memory stores a program or an instruction capable of running on the processor, and when the program or the instruction is executed by the processor, the steps of the time determination method according to any one of claims 1 to 16 are implemented.

24. A network-side device, comprising a processor and a memory, wherein the memory stores a program or an instruction capable of running on the processor, and when the program or the instruction is executed by the processor, the steps of the time determination method according to any one of claims 17 to 20 are implemented.

25. A readable storage medium, wherein the readable storage medium stores a program or an instruction, and when the program or the instruction is executed by a processor, the steps of the time determination method according to any one of claims 1 to 16 are implemented, or the steps of the time determination method according to any one of claims 17 to 20 are implemented.
